# EUROPEAN PATENT SPECIFICATION

(11) **EP 0 270 727 B1**
(45) Date of publication and mention of the grant of the patent: **04.05.1994**
(21) Application number: 87102020.2
(22) Date of filing: 13.02.1987
(51) Int. Cl.: F16K 27/02, F16K 1/22

(54) **Valve casing for use in a butterfly valve**
Ventilgehäuse für die Verwendung in einem Drehklappenventil
Corps de vanne pour l'utilisation avec une vanne papillon

(30) Priority: 09.12.1986 JP 2943/86
(43) Date of publication of application: 15.06.1988
(73) Proprietor: Kurimoto, Ltd., Nishi-ku Osaka-shi Osaka (JP)
(72) Inventor: Miyake, Katsunobu, 2 Cho Sakai Osaka (JP); Horii, Hiroshi, Osaka (JP); Ikoma, Kenji, Osaka (JP)
(74) Representative: Stenger, Watzke & Ring Patentanwälte

(56) References cited:
- EP-A- 0 000 098
- EP-A- 0 114 417
- BE-A- 680 012
- FR-A- 2 357 797
- US-A- 2 729 238
- US-A- 3 753 548
- US-A- 4 188 012

## Description

This invention relates to a valve casing for use in a butterfly valve and, more particularly, to a novel structure of a valve casing formed by press working of metal plate. A valve casing comprising the features defined in the first part of claim 1 is e.g. known from JP-U-60-8577.

This known valve casing has been conventionally manufactured by casting a metal material such as cast iron or non-ferrous metal and machining a cast product, but recently as a result of advances in the field of sheeting presses the valve casing is manufactured by a method wherein a metal plate of iron or non-ferrous metal is formed into a valve casing by press working and a machining process is either omitted or kept to a minimum. By this method, large numbers of valve casings are now efficiently mass-produced with their dimensional accuracy assured. The manufacturing cost thereof is considerably saved as compared with the conventional method by casting and machining.

Furthermore, since the weight of a valve manufactured by the latter method is much reduced, an advantage can be enjoyed when installing it on a pipe line. The load applied to the pipe line during operation of valve is decreased and a further advantage thus gained in maintenance.

However a valve casing for use in a butterfly valve produced by press working has several disadvantages which are not displayed by a valve produced by casting. The disadvantages mainly due to poor thickness which are not the case of a valve produced by the conventional casting.

For example, since the thickness of a molded valve casing is relatively poor, a concentrated stress is applied to seal ring receiving portions when joining the molded valve casing to an adjacent pipe, resulting in deformation or breakage.

There is another problem that a seal ring gets out of place or broken, bringing about imperfect sealing during the operation.

A further problem exists in that heat energy is lost when the temperature of a fluid passing through the passage is high while outside air temperature is low. To the contrary, when the temperature of a fluid is low while that of the outside air is high, there is the possibility that such problems as freezing, breakage of pipe, etc. arise in the process of heat transference, although these problems are not peculiar to the valve casings produced by press working but common in every valve casing.

Accordingly, it is an object of this invention to provide a novel structure of valve casing for use in a butterfly valve which is formed by press working adaptable to mass-production so as to be thin and light in weight, and sufficiently resistant to compressive stress and inner pressure when fitted to a pipe line and clamped from both sides.

Another object of this invention is to provide a structure of valve casing in which a seal ring received by a seal ring receiving portion is firmly retained against force generated by fluid flow and is not displaced or broken by much force.

A further object of this invention is to provide a structure of valve casing not sensitive to differences in temperature between fluid passing through a bore of the valve body and outside atmosphere of pipe line.

A yet further object of this invention is to provide a structure of valve casing not sensitive to chemical difference between fluid passing through a bore of valve body and outside atmosphere of pipe line.

The foregoing object is accomplished according to this invention by providing a valve casing according to claim 1.

By the foregoing structure, when the valve casing is fitted to a pipe line to be clamped from both sides thereof, compressive stress applied to the seal ring receiving portions is uniformly received by end portions where the outer shell is superposed on the inner shell, thus the stress being shared by both shells reduces a burden to a bending line L of the inner shell by half.

In this connection, since the inner pressure by fluid passing through the bore inside is applied to the cylindrical body of the inner shell which is not thinned by the spreading out process, the cylindrical part remains sufficiently resistant to the inner pressure making it unnecessary to be particularly thickened or reinforced. In addition, the inner pressure applied to the seal ring receiving portions is supported also by the outer shell from the back to share the pressure between the inner shell and the outer shell.

To be more specific, as a result of constructing a valve casing of an inner shell and an outer shell, even when these shells are of thin material, there is less possibility of breakage or failure of the valve casing in the event an abnormal bending load is applied to the pipe line due to earthquake or the like.

A still further object of the invention is to attain a construction by which tight fitting between a seal ring and a seal ring receiving portion is not adversely affected due to ageing of the seal ring resulting in deterioration of sealing performance.

Furthermore, since the outer shell defines a space by surrounding the whole outer periphery of the inner shell to produce a layer of non-thermal conductivity, it is not necessary to take preventive measures concerning energy loss, accident due to high temperature, production of dew due to lower outside air temperature. Heat insulating material and/or warmers are not needed to prevent freezing.

Moreover, since the inner shell is not influenced by the outside air temperature and kept at the same level as fluid passing through the bore and the valve plug, the disadvantage of imperfect sealing caused by expansion of the valve casing due to a rise in the outside air temperature or imperfect operation of valve caused by contraction of the valve casing due to decrease in outside air temperature (both frequent in the prior art) is eliminated. A further object of the present invention is to provide a valve casing for use in butterfly valves by which a valve casing proposed by the preceding disclosure is further improved in the aspects of prevention of the seal ring from getting out of place and elimination of the problems at the time of heat transference.

The foregoing object is accomplished by providing a valve casing for use in butterfly valves in the form of the above-described double structure, and in which a cylindrical member composed of an elastic material is fitted so that a whole inner surface of the valve casing from inside said cylindrical part of the inner shell to the seal ring receiving portions is coated with said cylindrical member of an elastic material, thereby forming a passage and performing a function as a seal ring.

In order to more effectively achieve the foregoing object, it is preferable that a section of each seal ring receiving portion is S-shaped with its width on the outer diameter side larger than its width on the inner diameter side, and that an annular projection is formed near the portion where a concave is inflected to a convex forming said S-shaped seal ring receiving portion, so that an outer end of the cylindrical member is held in the concave of the S-shape portion and retained by said annular projection.

According to the foregoing structure the whole inside of the valve casing is coated with the elastic cylindrical member, the inner shell does not come in direct contact with a fluid, and the rate of flow depends on the inner diameter of the elastic cylindrical member. That is to say, a portion coming in contact with the fluid and forming the passage is made of the elastic material. Opening and closing operation of the valve is performed by turning a valve disc fixed to a valve stem in the center of the cylindrical part. Since said cylindrical elastic member is deformed in accordance with the turning of the valve disc, a sealing function is performed between the inner periphery of the valve casing and the circumference of the valve disc.

Furthermore, since both ends of the elastic cylindrical member are engagedly inserted in the seal ring receiving portions near both ends of the valve casing as they are, a sealing function is also performed between each seal ring receiving portion and the joining pipe. In other words, this elastic cylindrical member performs every function carried out by the cylindrical part, the seal ring and the seat ring in the first embodiment.

The present invention is so constructed as above and performs the foregoing function that under-described advantages are insured in addition to the solution of the problem of poor thickness and prevention of the valve casing from being deformed or broken.

The elastic cylindrical member provided in the inner shell of the valve casing forms a passage by the inner diameter thereof and controls the rate of flow, and besides performs a function as a seat ring between it and the valve disk on the center portion while performing a further function as a seal ring between it and the joining pipes at the end portions. Since the elastic cylindrical member is solidly arranged being inserted through the valve casing in the axial direction thereof, the structure as a whole is strong and tough by far as compared with the first embodiment in which the cylindrical part, seal ring and seat ring are separately arranged to perform said functions. Accordingly, when a large stress is applied to the elastic cylindrical member, the member having a larger volume elastically deforms itself and successfully absorves the stress. As a result, the breakage of the cylindrical elastic member hardly occurs. Further, so long as the cylindrical elastic member is not broken, the member does not get out of place to lose the sealing function, the life span of the valve being lengthened thereby.

In this connection, according to the prior art, an arrangement is also preferably adopted, and in which two discs are superposed, and a peripheral edge portion thereof is open to form a recess groove into which an annular seat ring is engagedly fitted. According to such arrangement, however, a large torsional stress (or torque) applied when performing open and close operation is obliged to be met or absorved by a concentrated elastic deformation of the seat ring having a smaller volume. As a result, the seat ring is sometimes broken by the load and gets out of place. Such problem is also solved by the present invention.

Concerning the sealing of both ends joined to the pipes, since the clamping force applied when joining to the pipes and the pressure due to a fluid passing through the valve casing are received and sufficiently absorved by the larger volume of the cylindrical elastic member, there is no possibility that the seal ring gets out of the seal ring receiving portion.

Furthermore, according to the invention, a heat insulating effect is sufficiently attained, since the inside of the inner shell is completely coated with the elastic member of heat insulating material in addition to the double structure of the outer shell and the inner shell forming a space which inhibits the heat transference. It can be said that even when the inner shell is made of some economical steel in place of stainless steel, substantially the same effect is attained by disposing said elastic material which inhibits the heat transference between the outside air and the fluid inside. When the inner shell of a special steel to meet exposure to a special atmosphere such as corrosive atmosphere is replaced with some ordinary steel, the same effect is supposed to be insured since the whole portion coming in contact with the fluid is composed of the elastic member of high corrosion resistance.

Other features and advantages of the present invention will become apparent in the course of the following description together with the accompanying drawings, in which like parts are designated by like reference numerals, and, in which:
- Figure 1: is a partially sectional front view of a first embodiment of this invention;
- Figure 2: is a partially sectional side view of the first embodiment;
- Figure 3: is a partially cutaway perspective view thereof;
- Figure 4: is a partially sectional view of a second embodiment;
- Figure 5: is a partially sectional front view of a third embodiment;
- Figure 6: is a sectional view of a further embodiment;
- Figure 7: is a partially sectional front view of a further embodiment of the present invention;
- Figure 8: is a partially sectional side view of the embodiment of Figure 7;
- Figure 9: is a partially cutaway perspective view of the embodiment of Figures 7 and 8;
- Figure 10: is a partially sectional front view of a further embodiment;
- Figures 11, 12 and 13: are respectively a sectional front view, a partially perspective view and a schematic sectional view of individual prior arts.

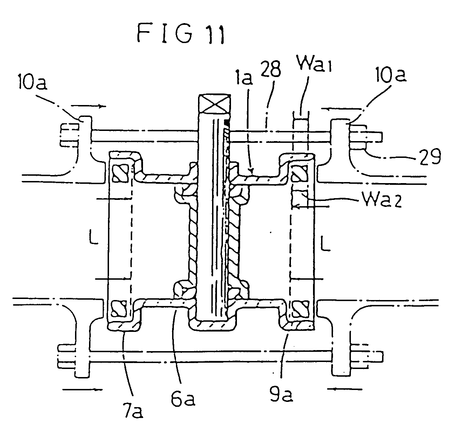

Discussing first Figures 11, 12 and 13 which show the prior art, Figure 11 shows an ordinary butterfly valve in a fitting state.

In Figure 11, valve casing 1a comprises a cylindrical body 6a and seal ring receiving portions 7a formed by bending both ends thereof to making a right angle. Seal rings 9a are fitted in these seal ring receiving portions so as to be in contact with flanges 10a, 10a of a pipe line on both sides. These flanges are provided with a plurality of circular apertures to connect one aperture on one side with the other on the corresponding side. The seal rings fitted in the receiving portions perform water sealing are pressed and contacted closely by clamping one aperture portion on the other by a bolt 28 and a nut 29. When a clamping force is applied in a horizontal direction, the stress produced is concentrated on a bending line L of each seal ring receiving portion 7a, and accordingly there is the possibility of deformation, breakage or failure due to reduction of thickness of metal plate. In particular, the bending line area is formed thinner than its original thickness by a rolling process using a press to enlarge or extend a diameter of each end portion to be larger than the cylindrical body 6a. Otherwise a seal ring receiving member formed separately is fixed to this area. Thus this area is lowest in strength of all parts of the valve casing. As a result breakage occurs most easily at this area.

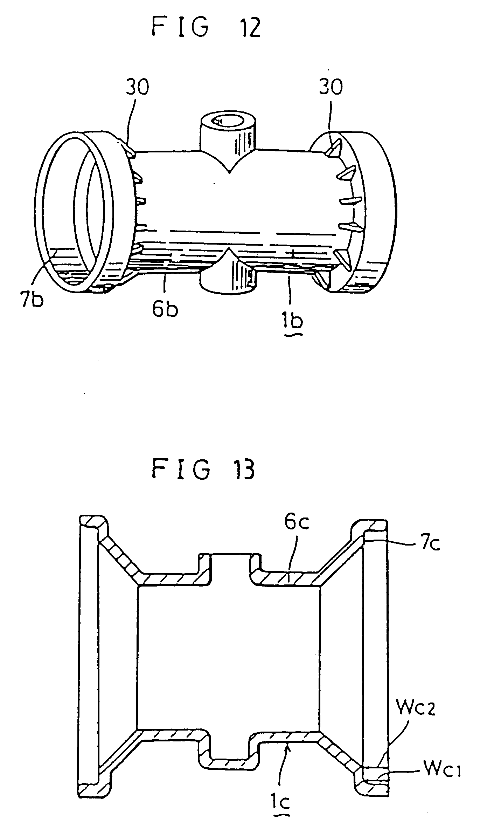

Several attempts have been proposed to solve the above problems. For example, as shown in Figure 12, a plurality of triangular reinforcing ribs 30 are fitted by welding to a corner where the cylindrical body 6b is adjacent to the seal ring receiving portion 7b. Alternatively, and as shown in Figure 13, a cylindrical body 6c diverges like an unfolded fan from a middle part thereof (Japanese laid open Utility model Publication No. 60-8577 titled "Structure of Valve Casing" disclosed by the applicant).

Both of these structures, however, have the following disadvantages.

In case of Figure 12, since variance in resistance to inner pressure is produced, depending on their portions, a large number of ribs are required so that production efficiency is lowered. This makes mass-production difficult.

In case of Figure 13, an advantage is attained in the aspect of resistance to compressive stress since a load applied thereto is divided in the form of vector. However, since a load applied by fluid pressure to a periphery of pipe is increased in proportion to the diameter of the pipe, a large amount of load is applied to an inner wall of the portion spread out. Accordingly, it is necessary to calculate a thickness of metal plate that is resistant to such a load and allows a reduction in thickness when deciding the thickness as the thickness of metal plate is decreased during the forming of the enlargement in the press working.

A further disadvantage of the valve casing formed by press working is that the seal ring easily gets out of place or is broken. Referring to section 7a or 7c of each seal ring receiving portion shown in Figures 11 and 13, since width Wa₁ or Wc₁ of outer diameter side of the seal ring to be received is formed either the same or of only a little smaller than width Wa₂ or Wc₂ of the inner diameter side, the seal ring may be sucked inward by fluid passing through the valve body. This gives imperfect sealing or breakage of the seal ring.

A problem common in valve casing in general (including casings made of cast iron besides one formed by press working), the seal ring itself inevitably deteriorates with age causing lowering in the sealing performance of valve casing. It becomes necessary to replace the seal ring or to clamp with a clamping bolt to reinforce the reduced sealing performance.

It is also possible that when the fit of the seal ring loosens due to ageing a space forms between the seal ring and the seal ring receiving portion. This allows corrosion between the components, depending on the material, and shortens the life of the valve. It is well known, that corrosion occurs easily with austenitic stainless steel.

Furthermore, when the temperature or chemical composition is different between the inside and outside of a pipe line, there is the problem of selecting the valve structure and material to fit the valve to the pipe line.

For example, when the temperature of a fluid passing through the valve is high and outside air temperature is low, energy loss due to heat radiation is increased. When the temperature of the fluid is ordinary while outside air temperature is low, freesing or break down of the pipe line may occur.

As for the chemical atmosphere, the selection of material is a difficult problem particularly when the outside atmosphere of the pipe line is alkaline.

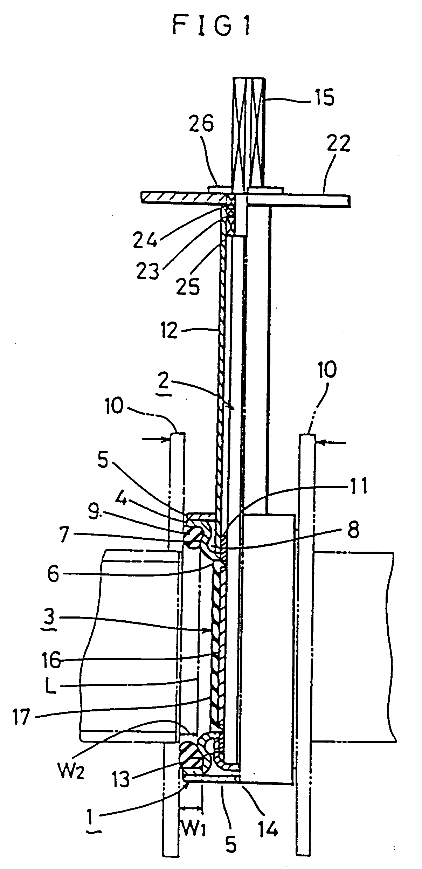

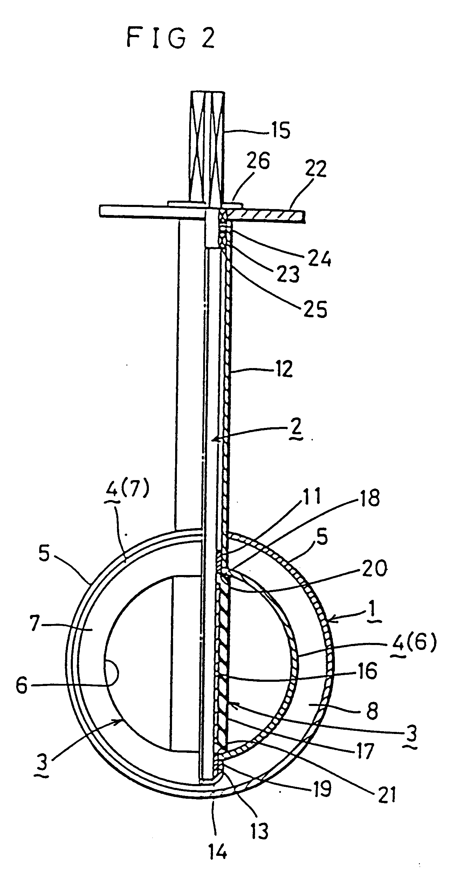

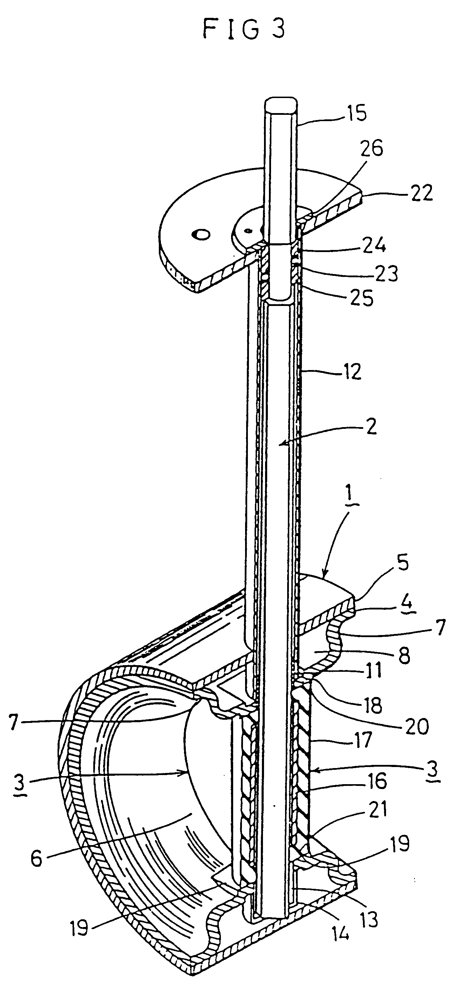

Referring now to Figure 1, Figure 2 and Figure 3, a preferred embodiment of this invention is described in detail hereinafter.

In these drawings, a valve casing 1 comprising an inner shell 4 and an outer shell 5 is fitted to a pipe line and held between flanges 10, 10 of the pipe line.

The inner shell 4 forms a cylindrical body of thin steel place defining an internal bore. A middle part of the shell 4 is used as cylindrical part 6 as it is, and both ends thereof are enlarged to form S-shaped seal ring receiving portions 7, 7 by press working. In this embodiment, this S-shape is inclined or deformed so that width W₁ of outer diameter side of a seal ring 9 to be received in each seal ring receiving portion 7 may be larger than width W₂ of the inner diameter side thereof.

In this connection, in the conventional valve casings shown in Figures 11 and 13, since width Wa₂ or Wc₂ of inner diameter side is either larger than or the same as width Wa₁ or Wc₁ of outer diameter side as shown in sectional view of the seal ring receiving portions 7a or 7c in each drawing, an adhesion resistant to flow (or carrying away force) of liquid is not sufficient. As a result the seal ring 9a or 9c may be displaced, and lose sealing effect or be broken and swept away.

On the other hand, the above-described structure of the seal ring receiving portion of this embodiment, i.e., the narrowed width W₂, produces a peculiar effect of prevention to the above-discussed disadvantage of the prior art. Thus the above second object of this invention is attained.

Elasticitiy is produced on a wall surface of the S-shaped seal ring receiving portion made of a thin metal plate. This performs the function of spring and shock absorption thereby improving considerably the tight fit between the seal ring receiving portion and the seal ring inserted in it. The elasticity of the wall surface of the seal ring receiving portion is not lowered even when the elasticity of the seal ring itself is lowered. The tight fit of the seal ring is kept over a long period. As a result, it is not necessary to carry out such troublesome work as clamping the fitted portion with clamping bolts to meet the lowering of sealing performance of the valve casing due to ageing of the ring.

Further, as the bearing capability of a curved projecting portion of the seal ring receiving portion is large compared with the other fitting portion, a joined portion between the metallic part and the seal ring exposed to fluid is tightly fitted. There is no room for a space to develop therebetween. Accordingly, there is no possibility of corrosion in the space contacting the fluid, which might occur (depending on material) if a space is formed (as is often the case of using austenitic stainless steel). This effect is achieved only when a seal ring is made of a thin metal plate and received in the seal ring receiving portion of a specified shape.

The outer shell 5 formed into a thin cylindrical body composed of steel plate attached to the outer periphery of the inner shell by butt welding.

A valve stem (or valve rod) 2 is a shaft member of square section rotatably supported by an upper bearing 12 through an upper bush 11 and by a lower bearing 14 through a lower bush 13, respectively. Drive means (not illustrated) such as wrench, lever, wheel and the like are mounted on a driven part 15 protruding from the upper bearing 12 to turn the valve stem 2 in the valve casing 1.

The inner peripheries of both of the upper and lower bushes are also square to correspond to the outer periphery of the valve stem 2. They are fixed by press fitting. Outer peripheries of the bushes 11, 13 are cylindrical and are rotatable in the upper and lower bearings 12, 14.

The valve disc 3 is fixedly mounted on the valve stem 2 in the valve casing 1 and comprises valve plates 16 formed by a pair of circular thin steel plates holding the valve stem therebetween and a covering member 17 composed of elastic material, such as rubber, to cover the whole outside of the valve plates.

A part of the inner shell is pressed to form an upper plane face 18 and a lower plane face 19 around the valve stem 2 which penetrates through a clyindrical middle part defining a bore of the inner shell, and further plane faces 20, 21 corresponding to the plane faces 18, 19 are formed on the outer periphery of the valve disc 3 so that the valve casing and the valve disc may slide to keep a sealing state corresponding to the turning movement of the valve stem.

The drive means for turning the valve stem 2 are fitted to a flange 22, and such other parts as seal ring 23, split ring 24, 25, junk ring 26 are fitted immediately beneath the flange 22 for sealing the valve stem and the upper bearing.

With regard to members other than the valve casing 1, they can be replaced with known devices as a matter of course. For example, the valve stem 2 can be formed of hexagonal material in place of above square material, and the valve disc 3 need not always be covered with the elastic member. It is also possible to superpose two valve plates and form a recessed groove on the outer periphery thereof so that a seal ring 27 is fitted to the groove to slide while keeping a seal.

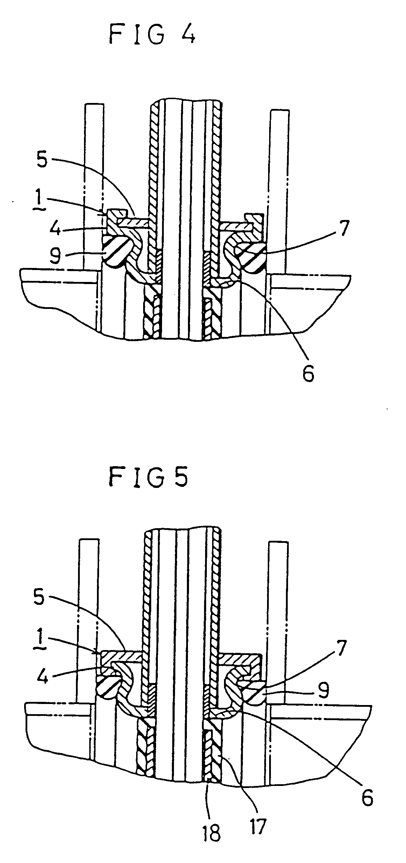

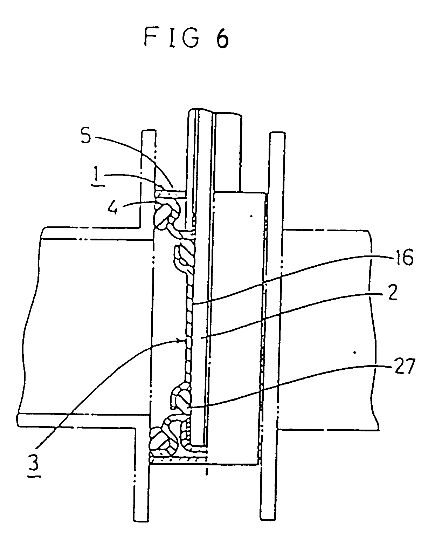

Figure 4 shows the second embodiment of this invention. An end of each seal ring receiving portion 7 of the inner shell is folded to be ⊐ -shaped in section, and an end of the outer shell is inserted into a recess produced by such formation to be fixed thereto by welding. Figure 5 shows the third embodiment wherein the end of the outer shell is folded to be ⊐ -shaped in section and the end of the seal ring receiving portion 7 is inserted in a recess produced by such formation to be welded to it.

A peculiar advantage attained by such arrangements, i.e., the second and the third embodiments, is that since the end portion of the valve casing is composed of three layers by folding the end of either the inner shell or the outer shell, resistance to pressure is increased. As the end portion is in a state of firm engagement, it is possible to shorten bead length in the welding or apply spot welding to simplify the welding process. Furthermore, deformation due to heat can be reduced by the above structures.

With any of the above embodiments it is possible to manufacture the inner shell 4 and the outer shell 5 of different metals, if necessary, since both are formed by press working separately. Numerous assortments or combinations of different metal materials can be suggested such as high-tensile steel with mild steel, stainless steel with mild steel, stainless steel with Monel metal, mild steel with titanium or nickel with copper, as long as the assorted material allows press working of the inner shell.

A peculiar effect can be obtained by the foregoing embodiment such that, for example, the outer shell is made of high-tensile steel which is excellent in strength, while the inner shell is made of mild steel which is suited for plastic deformation working so that necessary processes such as deep drawing may be easily carried out.

A further advantage exists in that it is possible to select a material adapted to the characteristics of fluid flowing through a pipe and an outside atmosphere of the pipe. For example, when a fluid is alkaline while outside air is acid, it is possible to form a valve casing by combining the outer shell of a material resistant to acid with the inner shell of a material resistant to alkali. It is also possible to select a metal plate material with specified resistance to corrosion, heat, abrasion and the like depending on specified condtions of outside air and the bore inside, thus attaining the foregoing objects of this invention.

Finally, in any of the foregoing embodiments, accurate formation by press working is ensured by using adequate molds enabling easy mass-production at reasonable cost. As a result the above-dicussed problems of the prior arts can be overcome without losing, or still maintaning, the advantages of a butterfly valve formed by the conventional press working.

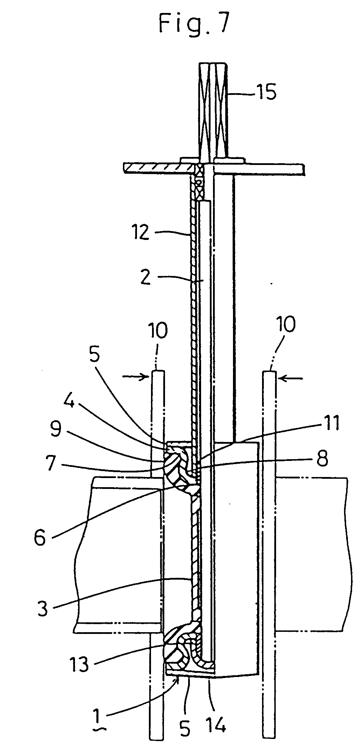

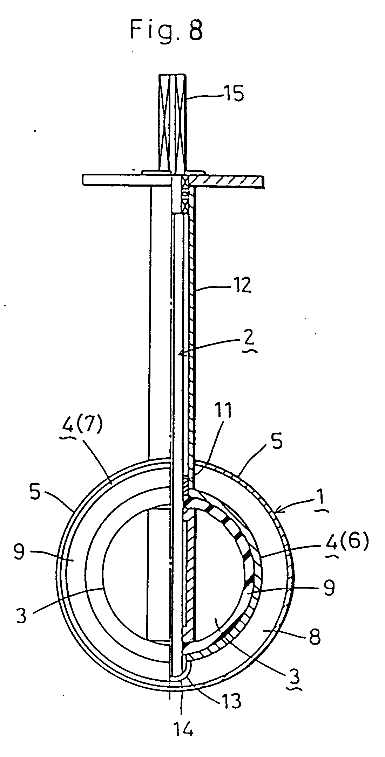

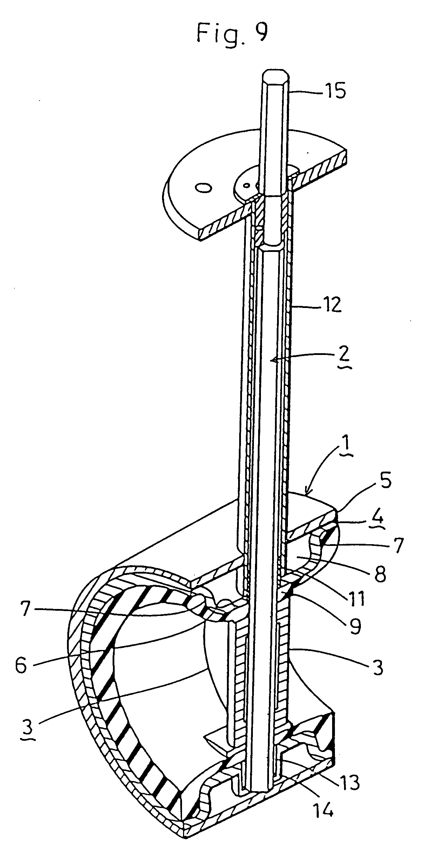

Referring now to Figs. 7 to 10, two preferred further embodiments of the invention are described in detail hereinafter.

In these drawings, a valve casing 1 comprising an inner shell 4 and an outer shell 5 is fitted to a pipe line held between flanges 10, 10 of the pipe line.

The inner shell 4 formed into a cylindrical body of thin steel plate defines a bore (i.e., a passage) inside. A middle part to the inner shell 4 is used as a cylindrical part 6 as it is, and both ends thereof are enlarged to form S-shaped seal ring receiving portions 7, 7 by press working.

The outer shell 5 formed into a thin cylindrical body of a steel plate is engagedly fitted to the outer periphery of the inner shell, being superposingly fixed to each other by butt welding.

A valve stem (or valve rod) 2 is a shaft member of square shape in section and is turnably supported by an upper bearing 12 through an upper bush 11 and by a lower bearing 14 through a lower bush 13, respectively.

Drive means (not illustrated) such as spanner, dedicated lever, wheel and others are mounted on a driven part 15 protruding from the upper bearing 12 when turning the valve stem 2 in the valve casing 1.

Inner peripheries of both upper and lower bushes 11 and 13 are also square-shaped corresponding to the outer periphery of the valve stem 2 and are fixed to the valve stem by press-fitting. Outer peripheries of the bushes 11, 13 are formed cylindrical and are trunable in the upper and lower bearings 12, 14.

A valve disc 3 is fixedly mounted on the valve stem 2 in the valve casing 1.

A cylindrical member 9 composed of an elastic material such as rubber is inserted in the circumferential portion of the inner shell to form a passage while being fitted to the outer peripheral edge of the valve disc 3. The elastic cylindrical member 9 comes in close contact with the outer peripheral edge of the valve disc all over the inner periphery of the inner shell to seal the passage when closing the valve. Both outsides of this elastic cylinrical member are thickened and inserted in the seal ring receiving portions 7. That is to say, the cylindrical member performs a sealing function in connection with the pipe line and prevents a fluid inside from leakage as described above.

As a matter of course, several members can be replaced with some known device. For example, the valve stem 2 can be formed of a hexagonal material in place of the above square-shaped material.

The cylindrical member 9 described above is a component separately formed of elastic material such as rubber, and is fitted inside the inner shell. But, since the present invention is characterized by the elastic cylindrical member which is exposed to be in direct contact with a fluid over the full surface thereof, it is also preferable that some fluid elastic material is injected into the inner shell and baked there so that a cylindrical member is fixedly interposed inside the inner shell as a result.

According to such embodiment, a considerable improvement is attained in the aspects of work efficiency, productivity, performance of the valve, durability and maintenance as compared with the conventional butterfly valve in which individual member (seal ring, seat ring) are separately made and assembled.

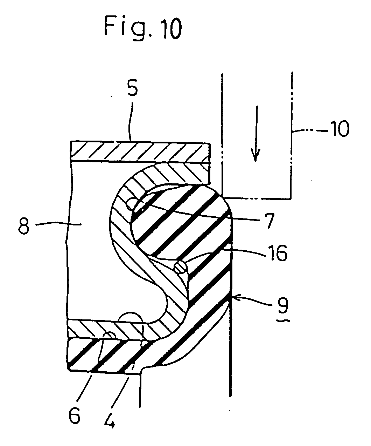

Fig. 10 illustrates a further embodiment in which means for effectively achieving the object is added.

In the drawing, the seal ring receiving portion 7 is substantially S-shaped in section, and the cylindrical elastic member 9 is held in the concave portion thereof. It is to be noted that an annular projection 16 is provided near the portion where the concave is inflected to the convex. An annular member made of a metal bar is preferably used as this annular projection. There is no inconvenience if a circle forming the annular projection is not complete having cutaway portions.

According to this embodiment, a peculiar effect is exhibited such that outer ends of the elastic cylindrical member is securely held in the seal ring receiving portion which is substantially S-shaped in section without getting out of place, performing thereby a perfect sealing function. Furthermore, when interposing a butterfly valve between the pipe lines, although the elastic cylindrical member 9 is initially pressed toward the center of the valve casing by the flange 10, but is retained at the portion, where the cylindrical elastic member is held as described above, by the annular projection 16, resulting in the prevention of the cylindrical member from being moved.

## Claims

1. A valve casing for use in a butterfly valve, comprising:
- a valve body (6) including a bore and seal ring receiving portions (7) at the ends of said valve body (6) with their diameters enlarged;
- seal rings (9) fitted in said seal ring receiving portions (7); and
- means to support a valve stem (2) and carrying a substantially circular valve disc (3);
characterized in that
- said valve body (6) is formed of thin metal plates by press working and comprises an inner shell (4) enclosed in an outer shell (5);
- said bore is defined by a cylindrical part of said inner shell (4);
- said seal ring receiving portions (7) are provided at the ends of said inner shell (4) and are substantially S-shaped in cross section;
- said seal rings (9) being shaped such that the width W1 at their outer periphery is larger than the width W2 at their inner periphery;
- said outer shell (5) is formed into a cylindrical body and defines a space with the surrounding outer periphery of said inner shell (4);
- said inner shell (4) and said outer shell (5) being fixed to each other resulting in improved strength and shock absorbing durability and elasticity.

2. A valve casing as claimed in claim 1, wherein the metal which forms the inner shell (4) and the metal which forms the outer shell (5) are composed of different kinds of metal compositions from each other.

3. A valve casing as claimed in claim 1 or 2, characterized in that said seal rings (9) consist of a cylindrical member which is fitted so that a whole inner surface of the valve casing form inside said cylindrical part of the inner shell (4) to the seal ring receiving portions (7) is coated with said cylindrical member (9) of an elastic material, thereby forming a passage and performing a function as seal ring.

4. A valve casing as claimed in claim 3, wherein each seal ring receiving portion (7) is S-shaped in section with its width on the outer diameter side larger than its width on the inner diameter side, and that an annular projection (16) is formed near a portion where a concave is inflected to a convex forming said S-shaped seal ring receiving portion (7), so that an outer end of the cylindrical member (9) is held in the concave of the S-shaped portion an retained by said annular projection (16).

## Patentansprüche

1. Ventilgehäuse für den Gebrauch in einem Drosselklappenventil bestehend aus
einem Ventilkörper (6), der einen inneren Zylinderdurchmesser und an den Enden des Ventilkörpers (6) Aufnahmen (7) für Dichtringe umfaßt, deren Durchmesser vergrößert ist,
aus in die Aufnahmen (7) für die Dichtringe eingepaßten Dichtringen (9) und aus
Mitteln zur Stützung einer Ventil-Stange (2), die eine im wesentlichen kreisförmige Ventilscheibe (3) trägt,
**dadurch gekennzeichnet,**
daß der Ventilkörper (6) aus dünnen preßgeformten Metallplatten zusammengesetzt ist und eine in eine äußere Schale (5) eingeschlossene innere Schale (4) umfaßt,
daß der innere Zylinderdurchmesser durch einen zylindrischen Teil der inneren Schale (4) bestimmt ist,
daß die Aufnehmen (7) für die Dichtringe an den Enden der inneren Schale (4) vorgesehen sind und einen im wesentlichen S-förmigen Querschnitt aufweisen,
daß die Dichtringe (9) derart ausgeformt sind, daß die Dicke (W1) ihres äußeren Randbereiches größer als die Dicke (W2) ihres inneren Randbereiches ist,
daß die äußere Schale (5) als zylindrischer Körper ausgebildet ist und mit der umgebenden Außenfläche der inneren Schale (4) einen Raum bestimmt und
daß die innere Schale (4) und die äußere Schale (5) miteinander verbunden sind, so daß sich eine verbesserte Festigkeit, schwingungsdämpfende Beständigkeit und eine verbesserte Elastizität ergeben.

2. Ventilgehäuse nach Anspruch 1, dadurch gekennzeichnet, daß das Metall der inneren Schale (4) und das Metall der äußeren Schale (5) aus voneinander unterschiedlichen metallischen Zusammensetzungen bestehen.

3. Ventilgehäuse nach Anspruch 1 oder 2, dadurch gekennzeichnet, daß die Dichtringe (9) einen zylindrischen Bestandteil aufweisen, der derart eingepaßt ist, daß die gesamte Innenfläche des Ventilgehäuses innerhalb des zylindrischen Teils der inneren Schale (4) ausgebildet ist, so daß die Aufnahmen (7) für die Dichtringe von dem zylindrischen Bestandteil (9) eines elastischen Materials bedeckt sind, so daß ein Durchfluß gebildet ist und die Funktion des Dichtringes erfüllt wird.

4. Ventilgehäuse nach Anspruch 3, dadurch gekennzeichnet, daß jede Aufnahme (7) für die Dichtringe einen S-förmigen Querschnitt aufweist, wobei die Dicke am äußeren Durchmesser größer als die Dicke am inneren Durchmesser ist, und daß ein ringförmiger Vorsprung (16) in der Nähe des Bereiches ausgeformt ist, in dem durch eine in eine konvexe Krümmung übergehende konkave Krümmung die S-förmige Aufnahme (7) für die Dichtringe gebildet ist, so daß ein äußeres Ende des zylindrischen Bestandteiles (9) in der konkaven Krümmung der S-Form gefaßt und durch den ringförmigen Vorsprung (16) gehalten ist.

## Revendications

1. Corps de vanne destiné à être utilisé dans une vanne papillon, comportant :
- un corps de vanne (6) comprenant un alésage et des parties de réception de bague d'étanchéité (7) aux extrémités dudit corps de vanne (6) avec leurs diamètres agrandis;
- des bagues d'étanchéité (9) logées dans lesdites parties de réception de bague d'étanchéité (7); et
- des moyens destinés à supporter une tige de vanne (2) et à porter un disque de vanne sensiblement circulaire (3);
caractérisé en ce que
- ledit corps de vanne (6) est réalisé en plaques métalliques minces par travail à la presse et comporte une enveloppe interne (4) enfermée dans une enveloppe externe (5);
- ledit alésage est défini par une partie cylindrique de ladite enveloppe interne (4);
- lesdites parties de réception de bague d'étanchéité (7) sont prévues aux extrémités de ladite enveloppe interne (4) et sont de section sensiblement en S;
- lesdites bagues d'étanchéité (9) sont d'une forme telle que la largeur W1 au niveau de leur périphérie extérieure est supérieure à la largeur W2 au niveau de leur périphérie intérieure;
- ladite enveloppe externe (5) est sous la forme d'un corps cylindrique et définit un espace avec la périphérie extérieure environnante de ladite enveloppe interne (4);
- ladite enveloppe interne (4) et ladite enveloppe externe (5) sont fixées l'une à l'autre avec pour résultat une résistance et une durabilité et une élasticité d'amortissement des chocs améliorées.

2. Corps de vanne selon la revendication 1, dans lequel le métal qui constitue l'enveloppe interne (4) et le métal qui constitue l'enveloppe externe (5) sont de types de composition métallique différents.

3. Corps de vanne selon la revendication 1 ou 2, caractérisé en ce que lesdites bagues d'étanchéité (9) se composent d'un élément cylindrique qui est monté de telle sorte qu'une surface interne complète du corps de vanne de l'intérieur de ladite partie cylindrique de l'enveloppe interne (4) jusqu'aux parties de réception de bague d'étanchéité (7) est revêtue avec ledit élément cylindrique (9) d'une matière élastique, formant ainsi un passage et remplissant une fonction de bague d'étanchéité.

4. Corps de vanne selon la revendication 3, dans lequel chaque partie de réception de bague d'étanchéité (7) est de section en S avec sa largeur du coté du diamètre extérieur supérieure à sa largeur du coté du diamètre intérieur, et une saillie annulaire (16) est formée à proximité d'une partie où une forme concave s'infléchit en une forme convexe formant ladite partie de réception de bague d'étanchéité en S (7), de sorte qu'une extrémité extérieure de l'élément cylindrique (9) est maintenue dans la forme concave de la partie en S et retenue par ladite saillie annulaire (16).
